# EUROPEAN PATENT SPECIFICATION

(11) **EP 4 027 013 B1**
(45) Date of publication and mention of the grant of the patent: **20.03.2024**
(21) Application number: 20889731.4
(22) Date of filing: 16.10.2020
(51) Int. Cl.: F04B 39/00, F04B 39/02, F04B 35/04, F16C 3/14, F25B 1/02, F25B 31/00, F16C 3/10

(54) **CRANKSHAFT, COMPRESSOR, AND REFRIGERATION DEVICE**
KURBELWELLE, VERDICHTER UND KÜHLVORRICHTUNG
VILEBREQUIN, COMPRESSEUR ET DISPOSITIF DE RÉFRIGÉRATION

(30) Priority: 22.11.2019 CN 201911158486
(43) Date of publication of application: 13.07.2022
(73) Proprietor: Anhui Meizhi Compressor Co., Ltd., Hefei, Anhui 230031 (CN)
(72) Inventor: WANG, Chengcheng, Hefei, Anhui 230031 (CN)
(74) Representative: RGTH
(86) International application number: PCT/CN2020/121597
(87) International publication number: WO 2021/098423

(56) References cited:
- EP-B1- 0 558 806
- WO-A1-2016/119869
- CN-A- 102 272 453
- CN-A- 104 895 764
- CN-A- 106 194 659
- CN-A- 106 337 872
- CN-A- 107 288 845
- CN-U- 206 054 225
- CN-U- 206 221 259
- CN-U- 206 988 058
- CN-Y- 2 931 908
- DE-C1- 19 536 349
- JP-A- H0 211 872
- JP-A- 2001 295 766
- JP-A- 2013 036 409
- US-A- 4 033 016

## Description

### CROSS-REFERENCE TO RELATED APPLICATION

This application claims priority to Chinese Patent Application No. 201911158486.0 filed on November 22, 2019, and entitled "CRANKSHAFT, COMPRESSOR AND REFRIGERATION DEVICE".

### FIELD

The present disclosure relates to the field of refrigeration devices, and more particularly, to a crankshaft, a compressor and a refrigeration device.

### BACKGROUND

At present, fixed-speed reciprocating compressors are generally formed by casting. In order to meet displacement requirements of different reciprocating compressors, a crankshaft thereof is required to have different eccentricities and shaft diameters. However, when designing the crankshafts with different eccentricities and shaft diameters, new die sinking is required, causing low standardization and poor versatility of molds for casting the crankshaft, and increasing manufacturing costs. Moreover, it is necessary to form an oil supply channel on an outer surface of the casted crankshaft, a manufacturing process thereof is complicated, and an oil loading effect is poor.

Prior art document US 4 033 016 A discloses a crankshaft which is composed of a plurality of individual elements. Each of said elements comprises a crankshaft section with an end face and bearing surface means and also comprises a main shaft journal section with an end face and with bearing surface means. The end faces of pin sections to be connected to each other are electron beam welded together after centering pins have been inserted in bores arranged in, and perpendicular to the end faces to be welded together.

Document DE 195 36 349 C1 discloses two sides of the crank web which have tubular sections are joined near its bearing and crank pins. Hollow cavities in these pins are connected by oil ducts. The tubular sections of single elements of the crankshaft are connected to form the cavities. Mouldings are inserted into at least part of the hollow cavities and are spaced from their walls by spacers. The single elements are joined by friction welding. The edges of the welding seams protruding into the hollow cavities acts as the spacers for the mouldings.

The utility model CN 206 988 058 U relates to a compressor field and discloses a compressor and a crankshaft for a compressor, wherein, the crankshaft includes: a main shaft crank arm, a main shaft, a countershaft crank arm be connected with the one end of these main shaft crank arm and a countershaft be connected with the one end of these countershaft crank arm, wherein, the main shaft crank arm with countershaft crank arm are independent to each other, and are connected so as to be located axially between said main shaft and said countershaft and so that the axis of said main shaft and the axis of said countershaft are parallel to each other.

### SUMMARY

The present disclosure aims to solve at least one of the technical problems in the prior art or the related art.

In view of the above, a first aspect of the present disclosure provides a crankshaft.

A second aspect of the present disclosure provides a compressor.

A third aspect of the present disclosure provides a refrigeration device.

In this regard, the invention as defined by the appended claims provides a crankshaft including a first shaft, a second shaft, a first crank arm, a second crank arm, and a recessed portion. The first crank arm is disposed at an end of the first shaft, the first crank arm being provided with a first oil channel, and the first oil channel penetrates through the first shaft. The second crank arm is disposed at an end of the second shaft and the second crank arm being provided with a second oil channel, and the second oil channel penetrates through the second shaft. The recessed portion is disposed on an end surface of the first crank arm facing away from the first shaft or on an end surface of the second crank arm facing away from the second shaft. The second crank arm is configured to be connected to the first crank arm, in such a manner that the first oil channel and the second oil channel are in communication with each other via the recessed portion. The second shaft is eccentrically arranged relative to an axis of the first shaft in a first direction, and the recessed portion at least partially extends in the first direction.

The crankshaft according to the embodiments of the present disclosure includes the first shaft, the first crank arm, the second shaft, and the second crank arm. By setting the first oil channel in the first crank arm with the first oil channel penetrating through the first shaft and setting the second oil channel in the second crank arm with the second oil channel penetrating through the second shaft, the first oil channel is in communication with the second oil channel after the second crank arm is connected to the first crank arm, and a lubricating oil can flow into the second oil channel through the first oil channel for oil supply. Furthermore, by setting the recessed portion on the end surface of the first crank arm facing away from the first shaft or setting the recessed portion on the end surface of the second crank arm facing away from the second shaft, the recessed portion is formed between the first oil channel and the second oil channel. On the one hand, it facilitates storing of the lubricating oil within the recessed portion to ensure that the second oil channel has sufficient lubrication oil, and on the other hand, since the second shaft is eccentrically arranged relative to the axis of the first shaft, the first oil channel and the second oil channel that are misaligned with each other are in communication with each other via the recessed portion, which facilitates flowing of the lubricating oil into the second oil channel through the first oil channel, thereby improving oil supplying effect.

Moreover, the second crank arm is configured to be connected to the first crank arm. That is, the first crank arm and the second crank arm are independent of each other and are subsequently assembled together, which facilitates the eccentric arrangement of the second shaft relative to the axis of the first shaft. Therefore, an eccentricity is adjustable according to an actual displacement requirement of a compressor so as to adjust a relative position of the second shaft to the first shaft, in such a manner that the crankshaft is applicable to compressors with different displacement requirements. For example, the crankshaft may obtain different eccentricities by fixing the first shaft and the first crank arm and moving the second crank arm and the second shaft in an eccentric direction. Compared with the related art in which the first shaft and the second shaft are integrally formed by casting and an oil supply channel needs to be fabricated on an outer surface of the crankshaft, versatility of components of the crankshaft is increased, and there is no need to manufacture the oil supply channels and the crankshafts with different eccentricities through manufacturing equipment of complex functions or various structures. Thus, the manufacture is simple, and the manufacturing cost is reduced.

In these embodiments, the second shaft is eccentrically arranged relative to the axis of the first shaft in the first direction. That is, the axis of the second shaft is parallel to the axis of the first shaft and is spaced apart from the axis of the first shaft in the first direction. By setting the recessed portion extending at least partially in the first direction, it facilitates the lubricating oil in the first oil channel to flow into the second oil channel via the recessed portion, facilitating supply of the lubricating oil into the second oil channel, and improving the lubricating effect.

In addition, the crankshaft in the above technical solution provided by the present disclosure may further have the following additional technical features.

In some embodiment, the recessed portion is disposed on the end surface of the first crank arm facing away from the first shaft, and the first oil channel penetrates through a part of a bottom wall of the recessed portion.

In these embodiments, the recessed portion is disposed on the end surface of the first crank arm facing away from the first shaft, and by allowing the first oil channel to penetrate through a part of the bottom wall of the recessed portion, on the one hand, it is advantageous to sufficient communication between the first oil channel and the recessed portion, and on the other hand, the lubricating oil can be stored within a part of the recessed portion that is not penetrated, and supplied to the second oil channel, thereby improving the lubricating effect.

In some embodiments, the recessed portion is disposed on the end surface of the second crank arm facing away from the second shaft, and the second oil channel penetrates through a part of a bottom wall of the recessed portion.

In these embodiments, the recessed portion is disposed on the end surface of the second crank arm facing away from the first shaft, and by allowing the second oil channel to penetrate through a part of the bottom wall of the recessed portion, on the one hand, it is advantageous to sufficient communication between the second oil channel and the recessed portion, and on the other hand, the lubricating oil can be stored within a part of the recessed portion that is not penetrated, and supplied to the second oil channel, thereby improving the lubricating effect.

In some embodiments, the recessed portion has an opening in an elliptical shape with a center eccentrically arranged relative to the axis of the first shaft in the first direction.

In these embodiments, the recessed portion is designed to have an opening in an elliptical shape. In this case, the recessed portion may be an elliptical sink structure. By eccentrically arranging the center of the elliptical shape relative to the axis of the first shaft in the first direction, it further ensures that a large amount of lubricating oil can flow into the second oil channel via the recessed portion, thereby improving the lubricating effect.

Of course, in other embodiments, the opening of the recessed portion may be in an elongated or circular shape, and is not limited to the elliptical shape.

In some embodiments, the elliptical shape has a short axis extending in the first direction and a long axis corresponding to two short arc segments. The two short arc segments are located on the first crank arm, and one of the two short arc segments extends to a region where the second oil channel is located. Alternatively, the two short arc segments are located on the second crank arm, and one of the two short arc segments extends to a region where the first oil channel is located.

In these embodiments, when the recessed portion is disposed on the first crank arm, the short axis of the elliptical shape extends in the first direction, and one of the two short arc segments corresponding to the long axis extends to the region where the second oil channel is located, such that the recessed portion is at least partially aligned with and connected to the second oil channel so as to be in direct communication with the second oil channel. Therefore, on the one hand, the lubricating oil can be stored within the recessed portion in a short axis direction, and on the other hand, since one of the short arc segments extends to the region where the second oil channel is located, the lubricating oil can be conveniently supplied to the second oil channel. In addition, when the recessed portion is disposed on the second crank arm, the short axis of the elliptical shape extends in the first direction, and one of the two short arc segments corresponding to the long axis extends to the region where the first oil channel is located, such that the recessed portion is at least partially aligned with and connected to the first oil channel so as to be in direct communication with the first oil channel. Therefore, on the one hand, the lubricating oil can be stored within the recessed portion in a short axis direction, and on the other hand, since one of the short arc segments extends to the region where the first oil channel is located, the first oil channel can conveniently supply the oil to the second oil channel through the recessed portion. In addition, by setting that one of the short arc segments extends to the region where the second oil channel or the first oil channel is located under any eccentricity condition of the crankshaft, the recessed portion is in communication with the second oil channel or the first oil channel.

In some embodiments, the first crank arm and the first shaft are integrally formed. The second crank arm and the second shaft are integrally formed. The first crank arm is connected to the second crank arm. By integrally forming the first crank arm and the first shaft, integrally forming the second crank arm and the second shaft, and then connecting the first crank arm and the second crank arm together to realize the assembling of the crankshaft, the manufacture is simple and modularized, displacement requirements of different compressors can be satisfied, and especially, the second crank arm can be connected onto the first crank arm under various displacement requirements, thereby improving manufacturing efficiency of the crankshaft.

Of course, the first crank arm may be connected to the first shaft by welding, and the second crank arm may also be connected to the second shaft by welding.

In some embodiments, the first crank arm and the first shaft are integrally formed by forging and pressing, and/or the second crank arm and the second shaft are integrally formed by forging and pressing. In this way, the forming is simple, the manufacturing process is mature, the manufacturing efficiency and material utilization rate are high, and the costs can be reduced while ensuring the quality of parts of the crankshaft. Compared with the related art in which the crankshaft is manufactured by a casting process and the oil supply channels are then fabricated on an outer surface of the crankshaft, by manufacturing the crankshaft through the forging and pressing process, the first crank arm and the first shaft having the first oil channel therein as well as the second crank arm and the second shaft having the second oil channel therein can be quickly realized with a predetermined accuracy, and the oil channels are directly formed by forging and pressing, and thus the manufacturing efficiency is improved. Moreover, a set of forging and pressing dies can meet the requirements of crankshafts with different eccentricities, such that the dies have very good versatility, thereby reducing development and manufacturing costs. In addition, pollution to the environment and large energy consumption due to metal casting and hot forming processes can be avoided.

Of course, the first crank arm and the first shaft may be integrally formed by turning, and likewise, the second crank arm and the second shaft may also be integrally formed by turning.

In some embodiments, the first crank arm and the second crank arm are welded together by resistance welding.

In these embodiments, the first crank arm and the second crank arm are connected together by the resistance welding. Since the welding strip can be energized and fused into a side of the first crank arm facing towards the second crank arm through the resistance welding, the connection is convenient and firm without generating warping of the second crank arm relative to the first crank arm, facilitating firm arrangement of the second crank arm in a suitable position on the first crank arm and the adjustment of the eccentricity of the second shaft relative to the first shaft. In addition, the second crank arm can be welded onto the first crank arm under all eccentricity conditions of the crankshaft so as to ensure the universality of the parts of the crankshaft.

In some embodiments, at an end of the second crank arm facing away from the second shaft is provided with a welding strip provided, and the welding strip is configured to be arranged around an outer periphery of the recessed portion. The second crank arm is welded onto the first crank arm through the welding strip by the resistance welding. In a case where the recessed portion is disposed on the first crank arm and has the opening in the elliptical shape, one of the two short arc segments corresponding to the long axis of the elliptical shape is adapted to extend to the region where the second oil channel is located, and the other short arc segment and two long arc segments corresponding to the short axis of the elliptical shape surround an opening of the first oil channel and are located inside the welding strip at any eccentric position.

In some other embodiments, the first crank arm and the second crank arm are welded together by laser welding. Thus, the connection is convenient and firm.

In some embodiments, a wall thickness of the first oil channel is not identical on any cross section of the first shaft.

In these embodiments, by setting the first oil channel having at least two different wall thicknesses on any cross section of the first shaft, a relative thin wall position and a relative thick wall position are present between the first oil channel and an outer surface of the first shaft, the first oil channel has a cross section which is for example a triangular, elliptical, or gourd-shaped hole, rather than a circular hole. Alternatively, the first oil channel may have a cross section which is a circular hole with a center deviated from the axis of the first shaft. During rotation of the crankshaft, since the first oil channel has at least two different wall thicknesses in a circumferential direction, resulting centrifugal forces are different so that the lubricating oil can be loaded at the thin wall position by the centrifugal forces and flow into the first oil channel and the second oil channel for lubrication. Thus, a good oil loading effect and a good lubricating effect are provided. Compared with the related art in which in order to guarantee an oil loading amount and a structural strength of the crankshaft, the crankshaft is designed with a large diameter to enable a large diameter of the oil channel so as to obtain enough centrifugal force and thus a desired oil loading amount, the crankshaft according to these embodiments can have a small volume while having an increased oil loading amount and guaranteeing the structural strength thereof.

In some embodiments, the first oil channel has an axisymmetric structure on any cross section of the first shaft.

In these embodiments, by designing the first oil channel having the axisymmetric structure such as an elliptical shape or a cruciate flower shape on any cross section of the first shaft, the first oil channel can be conveniently fabricated while ensuring the oil loading amount.

In some embodiments, the first oil channel has an axisymmetric special-shaped hole structure on any cross section of the first shaft. In this way, the first oil channel can be ensured to have greater variation in the wall thickness thereof, thereby ensuring that the first shaft can generate enough centrifugal force to guide the lubricating oil to be loaded.

In some embodiments, the first oil channel has a circular hole structure on any cross section of the first shaft, and the circular hole structure has a center deviated from the axis of the first shaft. By setting any cross section of the first oil channel having a circular hole shape, the fabrication thereof is convenient.

In some embodiments, the first oil channel has a thin-walled section and a thick-walled section on any cross section of the first shaft. The second shaft is arranged eccentrically relative to the axis of the first shaft in a direction away from the thin-walled section.

In these embodiments, the first oil channel is designed to have the thin-walled section and the thick-walled section on any cross section of the first shaft. The thin-walled section is the thinnest section by default, and the thick-walled section is a section having the thickest wall by default. That is, any thin-walled section has a smaller thickness than any thick-walled section. One or more thin-walled sections may be present, and likewise, one or more thick-walled sections may be present. By eccentrically arranging the second shaft relative to the axis of the first shaft in a direction away from the thin-walled section, i.e., the second shaft and the thin-walled section are not located at a same orientation with respect to the axis of the first shaft, an influence of the centrifugal force generated by the second shaft on the thin-walled section of the first shaft can be avoided, so as to prevent the thin-walled section from being fractured or damaged, thereby ensuring the structural strength of the thin-walled section, and enabling the crankshaft to have a small volume while having a high oil loading amount.

In some embodiments, the second shaft and the thin-walled section have a central angle greater than or equal to 90° relative to the axis of the first shaft.

In these embodiments, the second shaft and the thin-walled section are designed to have a central angle greater than or equal to 90° relative to the axis of the first shaft. That is, orthographic projections of the second shaft and the thin-walled section on any cross section of the first shaft have a central angle of at least 90° relative to the axis of the first shaft, such that the second shaft is separated from the thin-walled section by a sufficient distance, so as to effectively prevent an eccentric movement of the second shaft relative to the first shaft from affecting the thin-walled section of the first shaft and ensure that the thin-walled section and the second shaft has structural strengths satisfying the requirements of the crankshaft.

Specifically, the second shaft and the thin-walled section have a central angle of 90° relative to the axis of the first shaft, so that the thin-walled section is perpendicular to a movement direction of a piston of a reciprocating compressor. Of course, the second shaft and the thin-walled section may have a central angle of 120°, 180° or the like relative to the axis of the first shaft. The central angle may be determined based on the wall thickness and position of the thin-walled section.

In some embodiments, the thin-walled section has an inner contour being a first circular arc, the thick-walled section has an inner contour being a second circular arc, and each of the first circular arc and the second circular arc is opened towards the axis of the first shaft.

In these embodiments, the inner contour of the thin-walled section on any cross section of the first shaft is defined as the first circular arc and the inner contour of the thick-walled section on any cross section of the first shaft is defined as the second circular arc, which facilitates the manufacture and the quick loading of the lubricating oil. In addition, by allowing the first circular arc and the second circular arc to be opened towards the axis of the first shaft, the first oil channel has a larger space, which facilitates flowing of more lubricating oil into the first oil channel, thereby improving the lubricating effect and also facilitating the fabrication of the first oil channel.

In some embodiments, the thin-walled section has a wall thickness greater than or equal to 0.3mm, and/or the first circular arc has an arc length ranging from 3mm to 5mm, and/or a difference between a radius of the first circular arc and a radius of the second circular arc is in a range of 0mm to 2mm.

In these embodiments, by setting the thin-walled section having a wall thickness greater than or equal to 0.3mm, such as between 0.4mm and 0.5mm, the thin-walled section is ensured to have enough structural strength. In addition, by designing the first circular arc to have an arc length greater than 0mm, such as between 3mm and 5mm, the thin-walled section is ensured to have a sufficient oil loading amount. In addition, by setting the difference between the radius of the first circular arc and the radius of the second circular greater than or equal to 0mm, such as between 1mm and 2mm, if the difference between the two radii is 0, the first oil channel has a cross section of a circular hole structure, and the eccentric arrangement relative to the axis of the first shaft allows the first shaft to generate enough centrifugal force during rotation to guide the lubricating oil to be loaded.

In some embodiments, the first oil channel further has a transition section that connects the thin-walled section and the thick-walled section. Further, the transition section has an inner contour with a first straight line.

In these embodiments, by setting the first oil channel having the transition section on any cross section of the first shaft to connect the thin-walled section and the thick-walled section, the variation in the thickness of the first shaft can be buffered, thereby increasing the structural strength thereof.

In some embodiments, the transition section includes a first straight line which for example is tangent to each of the first circular arc and the second circular arc. Of course, the first straight line may not be tangent to the first circular arc or the second circular arc. The transition section may further include a fifth circular arc, and the first straight line is connected to the first circular arc and the second circular arc through the fifth circular arc.

In some embodiments, a first tangent line of the first circular arc at an intersection with the first straight line and a second tangent line of the second circular arc at an intersection with the first straight line have an included angle greater than 90° facing towards an inside of the first shaft. Thus, the first oil channel is ensured to have enough space therein to ensure the oil loading amount.

Of course, the included angle between the first tangent line and the second tangent line facing towards the inside of the first shaft may alternatively be smaller than 90°.

In some embodiments, the thin-walled section has an inner contour being a third circular arc, and the thick-walled section has an inner contour being a fourth circular arc. One of the third circular arc and the fourth circular arc is opened towards the axis of the first shaft, and the other one of the third circular arc and the fourth circular arc is opened away from the axis of the first shaft.

In some embodiments, the welding strip has an outer contour same as an outer contour of the second crank arm, and/or the welding strip has a cross section in a trapezoidal or wedge shape.

In these embodiments, by setting the welding strip having the same outer contour as the second crank arm, the second crank arm can be easily tightly connected onto the first crank arm without generating local warping of the second crank arm relative to the first crank arm. For example, the welding strip is located at an edge of the second crank arm and is connected to the edge of the second crank arm by a rounded corner. Alternatively, the welding strip is spaced apart from the edge of the second crank arm by a predetermined distance. The welding strip surrounds an opening at an end of a fourth oil channel by default. In addition, by setting the welding strip having the cross section in the trapezoid or wedge shape, for example in such a manner that the welding strip has an outward wedge shape at one side thereof facing towards the axis of the second shaft, the welding strip, when energized, is easily fused into a side of the first crank arm close to the second crank arm, to firmly connect the first crank and the second crank arm.

In some embodiments, an end surface of the welding strip facing towards the first crank arm has a width greater than or equal to 0.2mm.

In these embodiments, by setting the width of the end surface of the welding strip facing towards the first crank arm not less than 0.2mm, such as between 0.5mm and 0.8mm, the welding strip can firmly connect the first crank arm and the second crank arm.

In some embodiments, the first crank arm has a boss provided at one end thereof close to the first shaft.

In these embodiments, by forming the boss at the end of the first crank arm close to the first shaft, a gasket can be easily to be installed and positioned, which in turn facilitates installation of a bearing in the compressor to ensure perpendicularity of the bearing to the first shaft.

In some embodiments, the boss surrounds the first shaft and a groove is formed at an intersection of the boss with an outer contour of the first shaft, which facilitates stably supporting the bearing. Moreover, on the one hand, the presence of the groove facilitates subsequent fine finishing of the first shaft and makes way for cutting tools, and on the other hand, compared with the case where no groove is formed between the boss and the first shaft, the boss has a reduced fine grinding area, which facilitates the fine grinding of the boss and saves the costs. Specifically, the boss and the groove are present in correspondence to each other, and an inner surface of the groove has a circular arc surface, and may further have a sharp edge.

In some embodiments, the boss has a height greater than 0.5mm, and/or the groove has a depth less than or equal to 0.8 mm. Specifically, the boss may have a height of 1mm, 2mm, etc., and the groove may have a depth between 0.2mm and 0.4mm. In this way, the boss has enough structural strength to support the bearing and the rotor, and the fine grinding of the first shaft can be ensured by the groove.

In some embodiments, the first shaft is provided with a first oil hole, and the first oil hole is in communication with the first oil channel. The second shaft is provided with a second oil hole, and the second oil hole is in communication with the second oil channel.

In these embodiments, by setting the first shaft having the first oil hole in communication with the first oil channel and setting the second shaft having the second oil hole in communication with the second oil channel, the lubricating oil can flow out through the first oil hole and the second oil hole to lubricate structures of the compressor such as a rotor thereof.

In some embodiments, one or at least two first oil holes are present, and one or at least two second oil holes are present.

In some embodiments, the first oil hole has a diameter greater than or equal to 1.5mm, and the second oil hole has a diameter greater than or equal to 1.5mm. For example, each of the first oil hole and the second oil hole may have a diameter between 2mm and 4mm. In this way, the lubricating oil can flow out smoothly.

In some embodiments, each of the first shaft and the second shaft is a low carbon steel shaft or an alloy steel shaft. For example, a low carbon alloy steel is adopted, providing high structural strength and wear resistance.

Embodiments in the second aspect of the present disclosure provide a compressor including the crankshaft according to any one of the technical solutions as described above. Accordingly, the compressor has the beneficial effects of any one of the above technical solutions, and the description thereof will be omitted herein.

In some embodiments, the compressor further includes a housing, a motor, a bearing, and a piston. A bottom of the housing is provided with an oil pool. The motor is disposed in the housing and has a rotor sleeved on a first shaft. The bearing is sleeved on the first shaft and located between the rotor and a first crank arm. The piston is connected to one end of a linkage, and the linkage has another end connected to the second shaft. The first shaft can extend into the oil pool, so that the lubricating oil flows into the second shaft through the first shaft to realize the lubrication of the crankshaft, which in turn realizes the lubrication of the rotor and the linkage, thereby improving the lubrication effect, reducing wear and increasing the service life of the compressor.

In some embodiments, the boss of the crankshaft has a diameter greater than a diameter of a raceway of the bearing, for example by 1mm to 2mm, which is advantageous to stably support the bearing, and avoids large range movement of the bearing.

In some embodiments, the first shaft has a chamfer provided at an end thereof facing away from the second shaft, and the chamfer has a width smaller than any wall thickness of the first oil channel, which is convenient to guide the rotor to be installed onto the first shaft.

Embodiments in the third aspect of the present disclosure provide a refrigeration device including a compressor according to any one of the technical solutions as described above.

Since the refrigeration device according to the present disclosure includes the compressor according to any one of the above technical solutions, the refrigeration device has the beneficial effects of any one of the above technical solutions, and the description thereof will be omitted herein.

In some embodiments, the refrigeration device further includes a condenser, a pressure reducing member, and an evaporator. The compressor has an outlet in communication with an inlet of the condenser. The pressure reducing member has an inlet in communication with an outlet of the condenser. The evaporator has an inlet in communication with an outlet of the pressure reducing member and an outlet in communication with an inlet of the compressor. Thus, refrigeration and heating cycles can be realized. Further, since the compressor has a relatively long service life, a service life of the refrigeration system can be advantageously ensured.

Additional aspects and advantages of the present disclosure will become apparent from the following description, or will be learned from practicing of the present disclosure.

### BRIEF DESCRIPTION OF DRAWINGS

The above and/or additional aspects and advantages of the present disclosure will become apparent and readily appreciated from the following description of embodiments in conjunction with the accompanying drawings, in which:
FIG. 1 is a schematic sectional view of a crankshaft according to an embodiment of the present disclosure;
FIG. 2 is a sectional view taken along a direction A-A in FIG. 1;
FIG. 3 is a schematic structural diagram of a first shaft and a first crank arm according to an embodiment of the present disclosure;
FIG. 4 is another schematic structural diagram of the first shaft and the first crank arm according to an embodiment of the present disclosure;
FIG. 5 is yet another schematic structural diagram of the first shaft and the first crank arm according to an embodiment of the present disclosure;
FIG. 6 is a schematic structural diagram of a second shaft and a second crank arm according to an embodiment of the present disclosure;
FIG. 7 is another schematic structural diagram of a second shaft and a second crank arm according to an embodiment of the present disclosure; and
FIG. 8 is yet another schematic structural diagram of a second shaft and a second crank arm according to an embodiment of the present disclosure.

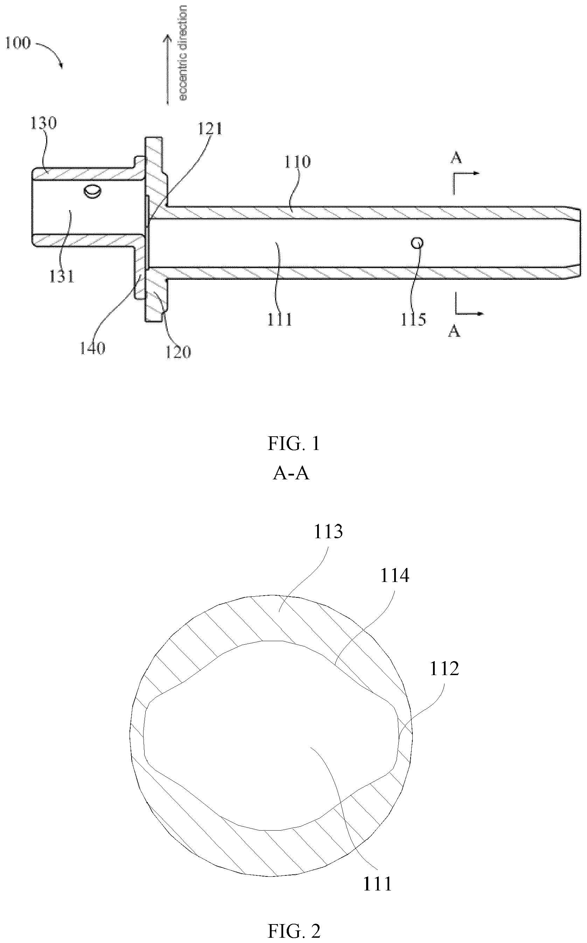

Correspondence between reference numerals in FIGS. 1 to 8 and component names:
100 crankshaft, 110 first shaft, 111 first oil channel, 112 thin-walled section, 113 thick-walled section, 114 transition section, 115 first oil hole, 120 first crank arm, 121 recessed portion, 122 boss, 130 second shaft, 131 second oil channel, 132 second oil hole, 140 second crank arm, 141 welding strip.

### DESCRIPTION OF EMBODIMENTS

The present disclosure will be described in detail below in conjunction with the accompanying drawings and specific embodiments in order to understand the above-mentioned purposes, features and advantages of the present disclosure more clearly. It should be noted that the embodiments of the present disclosure and the features thereof may be combined with each other without confliction.

In the following description, many specific details are set forth in order to provide a thorough understanding of the present disclosure. The present disclosure, however, can also be implemented in other manners different from those described herein. Therefore, the protection scope of the present disclosure is not limited by the specific embodiments disclosed below.

Crankshafts 100 according to some embodiments are described below with reference to FIG. 1 to FIG. 8.

### First Embodiment

As shown in FIG. 1, a crankshaft 100 includes a first shaft 110, a second shaft 130, a first crank arm 120, a second crank arm 140, and a recessed portion 121. The first crank arm 120 is disposed at an end of the first shaft 110 and has a first oil channel 111 provided therein. The first oil channel 111 penetrates through the first shaft 110. The second crank arm 140 is disposed at an end of the second shaft 130 and has a second oil channel 131 provided therein. The second oil channel 131 penetrates through the second shaft 130. The recessed portion 121 is disposed on an end surface of the first crank arm 120 facing away from the first shaft 110. The second crank arm 140 is configured to be connected to the first crank arm 120, in such a manner that the first oil channel 111 and the second oil channel 131 are in communication with each other via the recessed portion 121.

In this embodiment, by forming the recessed portion 121 on the end surface of the first crank arm 120 facing away from the first shaft 110 or on the end surface of the second crank arm 140 facing away from the second shaft 130, the recessed portion 121 is formed between the first oil channel 111 and the second oil channel 131. On the one hand, it facilitates storing of the lubricating oil within the recessed portion 121 to ensure that the second oil channel 131 has sufficient oil therein, and on the other hand, since the second shaft 130 is eccentrically arranged relative to an axis of the first shaft 110, the first oil channel 111 and the second oil channel 131 that are misaligned with each other are in communication with each other via the recessed portion 121, which facilitates flowing of the lubricating oil into the second oil channel 131 through the first oil passage 111, thereby improving oil supplying effect. Moreover, the second crank arm 140 is configured to be connected to the first crank arm 120. That is, the first crank arm 120 and the second crank arm 140 are independent of each other and are then subsequently assembled together, which facilitates the eccentrical arrangement of the second shaft 130 relative to the axis of the first shaft 110. Therefore, an eccentricity is adjustable according to an actual displacement requirement of a compressor. For example, the crankshaft 100 may obtain different eccentricities by fixing the first shaft 110 and the first crank arm 120 and moving the second crank arm 140 and the second shaft 130 in an eccentric direction. In this way, versatility of components of the crankshaft 100 is increased, and there is no need to manufacture the oil supply channels and the crankshafts 100 with different eccentricities through manufacturing equipment of complex functions or various structures. Thus, the manufacture is simple, and the manufacturing cost is reduced.

Further, as shown in FIG. 1, FIG. 4 and FIG. 5, the recessed portion 121 is disposed on the end surface of the first crank arm 120 facing away from the first shaft 110, and the first oil channel 111 penetrates through a part of a bottom wall of the recessed portion 121. By allowing the first oil channel 111 to penetrate through a part of the bottom wall of the recessed portion 121, on the one hand, it is advantageous to sufficient communication between the first oil channel 111 and the recessed portion 121, and on the other hand, the lubricating oil can be stored within a part of the recessed portion 121 that is not penetrated, and supplied to the second oil channel 131, thereby improving the lubricating effect.

Further, as shown in FIG. 1, the second shaft 130 is eccentrically arranged relative to the axis of the first shaft 110 in a first direction, and the recessed portion 121 extends at least partially in the first direction. The first direction is an eccentric direction shown by the arrow in the sectional view in FIG. 1. By setting the recessed portion 121 extending at least partially in the first direction, it facilitates the lubricating oil in the first oil channel 111 to flow into the second oil channel 131 via the recessed portion 121, facilitating supply of the lubricating oil into the second oil channel 131, and improving the lubricating effect.

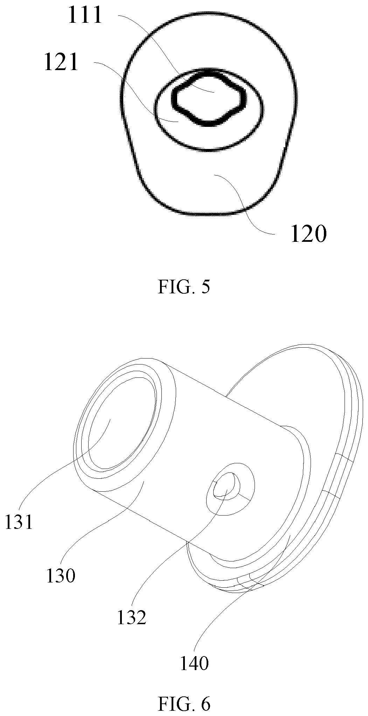

Further, as shown in FIG. 5, the recessed portion 121 has an opening in an elliptical shape with a center eccentrically arranged relative to the axis of the first shaft 110 in the first direction. The elliptical shape has a short axis extending in the first direction and a long axis corresponding to two short arc segments. One of the two short arc segments extends to a region where the second oil channel 131 is located. By allowing the short axis of the elliptical shape to extend in the first direction and allowing one of the two short arc segments corresponding to the long axis to extend to the region where the second oil channel 131 is located, the recessed portion 121 is at least partially aligned with and connected to the second oil channel 131 so as to be in direct communication with the second oil channel 131. In this way, on the one hand, the lubricating oil can be stored within the recessed portion 121 in a short axis direction, and on the other hand, since one of the short arc segments extends to the region where the second oil channel 131 is located, the first oil channel 111 can conveniently supply the lubricating oil to the second oil channel 131 by means of the recessed portion 121. In addition, one of the short arc segments is designed to extend to the region where the second oil channel 131 is located under any eccentricity condition of the crankshaft 100.

Of course, in other embodiments, the recessed portion 121 may also have an opening in an elongated or circular shape or other shapes, which is not limited to the elliptical shape.

### Second Embodiment

Unlike the first embodiment as described above, the recessed portion 121 is disposed on an end surface of the second crank arm 140 facing away from the second shaft 130.

Further, the recessed portion 121 is disposed on the end surface of the second crank arm 140 facing away from the second shaft 130, and the second oil channel 131 penetrates through a part of a bottom wall of the recessed portion 121. By allowing the second oil channel 131 to penetrate through a part of the bottom wall of the recessed portion 121, on the one hand, it is advantageous to sufficient communication between the second oil channel 131 and the recessed portion 121, and on the other hand, the lubricating oil can be stored within a part of the recessed portion 121 that is not penetrated, and supplied into the second oil channel 131, thereby improving the lubricating effect.

Further, the second shaft 130 is eccentrically arranged relative to the axis of the first shaft 110 in the first direction, that is, the axis of the second shaft 130 is parallel to the axis of the first shaft 110 and is spaced apart from the axis of the first shaft 110 in the first direction, and it is set that the recessed portion 121 extends at least partially in the first direction, which facilitates the lubricating oil in the first oil channel 111 to flow into the second oil channel 131 via the recessed portion 121, and facilitates supply of the lubricating oil into the second oil channel 131, thereby improving the lubricating effect.

Furthermore, the recessed portion 121 has an opening in an elliptical shape with a center eccentrically arranged relative to the axis of the first shaft 110 in the first direction. The elliptical shape has a short axis extending in the first direction and a long axis corresponding to two short arc segments. One of the two short arc segments extends to a region where the first oil channel 111 is located. By allowing the short axis of the elliptical shape to extend in the first direction and allowing one of the two short arc segments corresponding to the long axis to extend to the region where the first oil channel 111 is located, the recessed portion 121 is at least partially aligned with and connected to the first oil channel 111 so as to be in direct communication with the first oil channel 111. In this way, on the one hand, the lubricating oil can be stored within the recessed portion 121 in a short axis direction, and on the other hand, since one of the short arc segments extends to the region where the first oil channel 111 is located, the first oil channel 111 can conveniently supply the lubricating oil to the second oil channel 131 through the recessed portion 121. In addition, one of the short arc segments is designed to extend to the first oil channel 111 under any eccentricity condition of the crankshaft 100, in such a manner that the recessed portion 121 is in communication with the first oil channel 111.

Alternatively, the recessed portion 121 may have an opening in an elongated or circular shape or other shapes, and the opening is not limited to the elliptical shape.

### Third Embodiment

On the basis of the first or second embodiment as described above, as shown in FIG. 1, this embodiment further limits that the first crank arm 120 and the first shaft 110 are integrally formed, the second crank arm 140 and the second shaft 130 are integrally formed, and the first crank arm 120 is connected to the second crank arm 140. By integrally forming the first crank arm 120 and the first shaft 110, integrally forming the second crank arm 140 and the second shaft 130, and then connecting the first crank arm 120 and the second crank arm 140 together to realize the assembling of the crankshaft 100, the manufacture is simple and modularized, displacement requirements of different compressors can be satisfied, and especially, the second crank arm 140 can be connected onto the first crank arm 120 under various displacement requirements, thereby improving manufacturing efficiency of the crankshaft 100.

Further, the first crank arm 120 and the first shaft 110 are integrally formed by forging and pressing, and/or the second crank arm 140 and the second shaft 130 are integrally formed by forging and pressing. In this way, the forming is simple, the manufacturing process is mature, the manufacturing efficiency and material utilization rate are high, and the costs can be reduced while ensuring the quality of parts of the crankshaft 100. Compared with the related art in which the crankshaft 100 is manufactured by a casting process and the oil supply channels are then fabricated on an outer surface of the crankshaft 100, by manufacturing the crankshaft 100 through the forging and pressing process, the first crank arm 120 and the first shaft 110 having the first oil channel 111 as well as the second crank arm 140 and the second shaft 130 having the second oil channel 131 can be quickly realized with a predetermined accuracy, the oil channels are directly formed by the forging and pressing, and thus the manufacturing efficiency is improved. Moreover, a set of forging and pressing dies can meet the requirements of crankshafts 100 with different eccentricities, such that the dies have very good versatility, thereby reducing development and manufacturing costs. In addition, pollution to the environment and large energy consumption due to metal casting and hot forming processes can be avoided.

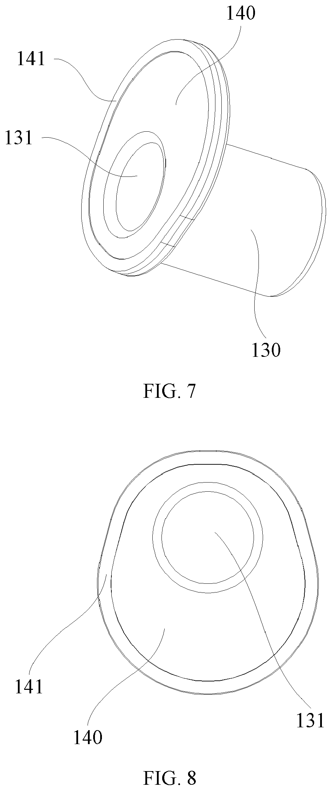

Further, as shown in FIG. 7 and FIG. 8, the second crank arm 140 has a welding strip 141 provided at an end thereof facing away from the second shaft 130. The welding strip 141 is configured to be arranged around an outer periphery of the recessed portion 121. The second crank arm 140 is welded onto the first crank arm 120 through the welding strip 141 by resistance welding.

Further, in a case where the recessed portion 121 is disposed on the first crank arm 120 and the opening of the recessed portion 121 is in the elliptical shape, one of the two short arc segments corresponding to the long axis of the elliptical shape can extend to the region where the second oil channel 131 is located, and the other short arc segment and two long arc segments corresponding to the short axis of the elliptical shape surround an opening of the first oil channel 111 and are located inside the welding strip 141 when at any eccentric position.

Specifically, as shown in FIG. 7 and FIG. 8, the welding strip 141 has an outer contour same as an outer contour of the second crank arm 140, and/or the welding strip 141 has a cross section in a trapezoidal or wedge shape. By setting the welding strip 141 having an outer contour same as an outer contour of the second crank arm 140, the second crank arm 140 can be easily tightly connected onto the first crank arm 120 without generating local warping of the second crank arm 140 relative to the first crank arm 120. For example, the welding strip 141 is located at an edge of the second crank arm 140 and is connected to the edge of the second crank arm 140 by a rounded corner. Alternatively, the welding strip 141 is spaced apart from the edge of the second crank arm 140 by a predetermined distance. The welding strip 141 surrounds an opening at an end of a fourth oil channel by default. In addition, by setting the welding strip 141 having the cross section in the trapezoid or wedge shape, for example in such a manner that the welding strip 141 has an outward wedge shape at one side thereof facing towards the axis of the second shaft 130, the welding strip 141, when energized, is easily fused into a side of the first crank arm 120 close to the second crank arm 140, to firmly connect the first crank 120 and the second crank arm 140.

Specifically, the welding strip 141 has an end surface facing towards the first crank arm 120 and having a width greater than or equal to 0.2mm. By setting the width of the end surface of the welding strip 141 facing towards the first crank arm 120 not less than 0.2mm, such as between 0.5mm and 0.8mm, the welding strip 141 can firmly connect the first crank arm 120 and the second crank arm 140.

Alternatively, the first crank arm 120 and the second crank arm 140 are welded together through laser welding, and such a connection is convenient and firm.

### Fourth Embodiment

On the basis of any one of the above embodiments, as shown in FIG. 2, the first oil channel 111 have at least two different wall thicknesses on any cross section of the first shaft 110.

In this embodiment, by setting the first oil channel 111 having at least two different wall thicknesses on any cross section of the first shaft 110, a relative thin wall position and a relative thick wall position are present between the first oil channel 111 and an outer surface of the first shaft 110, and the first oil channel 111 has a cross section which is for example a triangular, elliptical, or gourd-shaped hole, rather than a circular hole. Alternatively, the first oil channel 111 has a cross section which is a circular hole with a center deviated from the axis of the first shaft 110. During rotation of the crankshaft 100, since the first oil channel 111 has at least two different wall thicknesses in a circumferential direction, resulting centrifugal forces are different so that the lubricating oil can be loaded at the thin wall position under the centrifugal forces and flow into the first oil channel 111 and the second oil channel 131 for lubrication. Thus, a good oil supplying effect and a good lubricating effect are provided. Compared with the related art in which in order to guarantee an oil loading amount and a structural strength of the crankshaft 100, the crankshaft 100 is designed with a large diameter to enable a large diameter of the oil channel so as to obtain enough centrifugal force and thus a desired oil loading amount, the crankshaft 100 according to this embodiment can have a small volume while having an increased oil loading amount and guaranteeing the structural strength thereof.

Further, the first oil channel 111 has an axisymmetric structure on any cross section of the first shaft 110. By designing the first oil channel 111 having the axisymmetric structure such as an elliptical shape or a cruciate flower shape on any cross section of the first shaft 110, the first oil channel 111 can be conveniently fabricated while ensuring the oil loading amount.

For example, the first oil channel 111 has a circular hole structure on any cross section of the first shaft 110, and the circular hole structure has a center deviated from the axis of the first shaft 110. In addition, by setting the first oil channel 111 having a circular hole structure on any cross section thereof, it is convenient for manufacture.

Further, as shown in FIG. 2, the first oil channel 111 has an axisymmetric special-shaped hole structure such as a cruciate flower on any cross section of the first shaft 110. In this way, the first oil channel 111 can be ensured to have greater variation in the wall thickness thereof, thereby ensuring that the first shaft 110 can generate enough centrifugal force to guide the lubricating oil to be loaded.

### Fifth Embodiment

On the basis of the fourth embodiment as described above, as shown in FIG. 2, the first oil channel 111 has a thin-walled section 112 and a thick-walled section 113 on any cross section of the first shaft 110, and the second shaft 130 is arranged eccentrically relative to the axis of the first shaft 110 in a direction away from the thin-walled section 112.

In this embodiment, the first oil channel 111 is designed to have the thin-walled section 112 and the thick-walled section 113 on any cross section of the first shaft 110. Further, the thin-walled section 112 is the thinnest section by default, and the thick-walled section 113 is a section having the thickest wall by default. That is, any thin-walled section 112 has a smaller thickness than any thick-walled section 113. One or more thin-walled sections 112 may be present, and likewise, one or more thick-walled sections 113 may be present. By arranging the second shaft 130 eccentrically relative to the axis of the first shaft 110 in a direction away from the thin-walled section 112, the second shaft 130 and the thin-walled section 112 are not located at a same orientation with respect to the axis of the first shaft 110, an influence of the centrifugal force generated by the second shaft 130 on the thin-walled section 112 of the first shaft 110 can be avoided to prevent the thin-walled section 112 from being fractured or damaged, thereby ensuring the structural strength of the thin-walled section 112, and enabling the crankshaft 100 to have a small volume while having a high oil loading amount.

Further, the second shaft 130 and the thin-walled section 112 are designed to have a central angle greater than or equal to 90° relative to the axis of the first shaft 110. That is, orthographic projections of the second shaft 130 and the thin-walled section 112 on any cross section of the first shaft 110 have a central angle of at least 90° relative to the axis of the first shaft 110, such that the second shaft 130 is separated from the thin-walled section 112 by a sufficient distance, so as to effectively prevent an eccentric movement of the second shaft 130 relative to the first shaft 110 from affecting the thin-walled section 112 of the first shaft 110 and ensure that the thin-walled section 112 and the second shaft 130 have structural strengths satisfying the requirements of the crankshaft 100.

Specifically, the second shaft 130 and the thin-walled section 112 have a central angle of 90° relative to the axis of the first shaft 110, so that the thin-walled section 112 is perpendicular to a movement direction of a piston of a reciprocating compressor. Of course, the second shaft 130 and the thin-walled section 112 may have a central angle of 120°, 180° or the like relative to the axis of the first shaft 110. The central angle may be determined based on the wall thickness and position of the thin-walled section 112.

Further, as shown in FIG. 2, the thin-walled section 112 has an inner contour being a first circular arc, the thick-walled section 113 has an inner contour being a second circular arc, and each of the first circular arc and the second circular arc is opened towards the axis of the first shaft, which facilitates the manufacture and the quick loading of the lubricating oil. In addition, by allowing the first circular arc and the second circular arc to be opened towards the axis of the first shaft 110, the first oil channel 111 has a larger space, which facilitates flowing of more lubricating oil into the first oil channel 111, thereby improving the lubricating effect and also facilitating the fabrication of the first oil channel 111.

Alternatively, the thin-walled section 112 has an inner contour being a third circular arc, the thick-walled section 113 has an inner contour being a fourth circular arc, and one of the third circular arc and the fourth circular arc is opened towards the axis of the first shaft 110, and the other of the third circular arc and the fourth circular arc is opened away from the axis of the first shaft 110.

Specifically, the thin-walled section 112 has a wall thickness greater than or equal to 0.3mm, and/or the first circular arc has an arc length ranging from 3mm to 5mm, and/or a difference between a radius of the first circular arc and a radius of the second circular arc is in a range of 0mm to 2mm. By setting the thin-walled section 112 having a wall thickness greater than or equal to 0.3mm, such as between 0.4mm and 0.5mm, the thin-walled section 112 is ensured to have enough structural strength. In addition, by designing the first circular arc to have an arc length greater than 0mm, such as between 3mm and 5mm, the thin-walled section 112 is ensured to have a sufficient oil loading amount. In addition, by setting the difference between the radius of the first circular arc and the radius of the second circular arc greater than or equal to 0mm, such as between 1mm and 2mm, if the difference between the two radii is 0, the first oil channel 111 has a cross section of a circular hole structure, and the eccentric arrangement relative to the axis of the first shaft 110 allows the first shaft 110 to generate enough centrifugal force during rotation to guide the lubricating oil to be loaded.

Further, as shown in FIG. 2, the first oil channel 111 further has a transition section 114 that connects the thin-walled section 112 and the thick-walled section 113. With the transition section 114 connecting the thin-walled section 112 and the thick-walled section 113, the variation in the thickness of the first shaft 110 can be buffered, thereby improving the structural strength of the first shaft 110.

Further, the transition section 114 includes a first straight line which for example is tangent to each of the first circular arc and the second circular arc. Of course, the first straight line may not be tangent to the first circular arc or the second circular arc. Alternatively, the transition section 114 includes a first straight line and a fifth circular arc, and the first straight line is connected to the first circular arc and the second circular arc through the fifth circular arc.

Specifically, a first tangent line of the first circular arc at an intersection with the first straight line and a second tangent line of the second circular arc at an intersection with the first straight line have an included angle greater than 90° facing towards an inside of the first shaft 110. Thus, the first oil channel 111 is ensured to have enough space therein to ensure the oil loading amount.

Of course, the included angle between the first tangent line and the second tangent line facing towards the inside of the first shaft 110 may alternatively be smaller than 90°.

### Sixth Embodiment

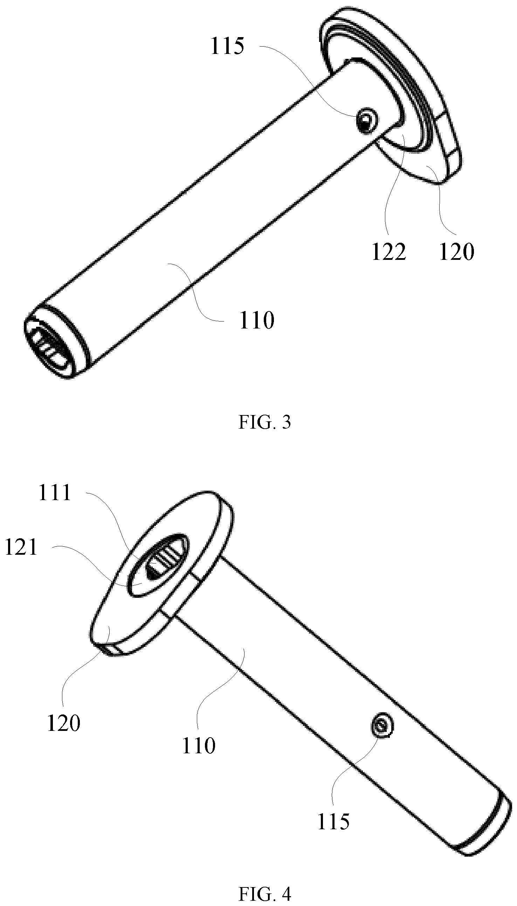

On the basis of any one of the embodiments as described above, as shown in FIG. 3, the first crank arm 120 has a boss provided at one end thereof close to the first shaft 110. By forming the boss 122 at the end of the first crank arm 120 close to the first shaft 110, a gasket can be easily installed and positioned, which in turn facilitates installation of a bearing in the compressor to ensure perpendicularity of the bearing to the first shaft 110.

Further, the boss 122 surrounds the first shaft 110 and a groove (not shown) is formed at an intersection of the boss 122 with an outer contour of the first shaft 110, which facilitates stably supporting the bearing. Moreover, on the one hand, the presence of the groove facilitates subsequent fine finishing of the first shaft 110 and makes way for cutting tools, and on the other hand, compared with the case where no groove is formed between the boss 122 and the first shaft 110, the boss 122 has a reduced fine grinding area, which facilitates the fine grinding of the boss 122 and saves the costs. Specifically, the boss 122 and the groove are present in correspondence to each other, and an inner surface of the groove has a circular arc surface, and may further have a sharp edge.

Further, the boss 122 has a height greater than 0.5mm, and/or the groove has a depth less than or equal to 0.8mm. Specifically, the boss 122 may have a height of 1mm, 2mm, etc., and the groove may have a depth between 0.2mm and 0.4mm. In this way, the boss 122 has enough structural strength to support the bearing and the rotor, and the fine grinding of the first shaft 110 can be ensured by the groove.

Further, as shown in FIG. 4 and FIG. 6, the first shaft 110 has a first oil hole 115 provided thereon, and the first oil hole 115 is in communication with the first oil channel 111. The second shaft 130 has a second oil hole 132 provided thereon, and the second oil hole 132 is in communication with the second oil channel 131. By setting the first shaft 110 having the first oil hole 115 in communication with the first oil channel 111 and the second shaft 130 having the second oil hole 132 in communication with the second oil channel 131, the lubricating oil can flow out through the first oil hole 115 and the second oil hole 132 to lubricate structures of the compressor such as a rotor thereof.

Specifically, one or at least two first oil holes 115 may be present, and one or at least two second oil holes 132 may be present.

Specifically, the first oil hole 115 has a diameter greater than or equal to 1.5mm, and the second oil hole 132 has a diameter greater than or equal to 1.5mm. For example, each of the first oil hole 115 and the second oil hole 132 may have a diameter between 2mm and 4mm. In this way, the lubricating oil can flow out smoothly.

Specifically, each of the first shaft 110 and the second shaft 130 is a low carbon steel shaft or an alloy steel shaft. For example, a low carbon alloy steel is adopted, providing high structural strength and wear resistance.

### Seventh Embodiment

A compressor includes the crankshaft 100 according to any one of the embodiments as described above. Since the compressor according to this embodiment includes the crankshaft 100 according to any one of the above embodiments, the compressor has the beneficial effects as described in any one of the above embodiments, and the description thereof will be omitted herein.

Further, the compressor further includes a housing, a motor, a bearing, and a piston. The housing has an oil pool at a bottom thereof. The motor is disposed in the housing and has a rotor sleeved on the first shaft 110. The bearing is sleeved on the first shaft 100 and located between the rotor and the first crank arm 120. The piston is connected to one end of a linkage, and the linkage has another end connected to the second shaft 130. The first shaft 110 can extend into the oil pool, so that the lubricating oil flows into the second shaft 130 through the first shaft 110 to realize the lubrication of the crankshaft 100, which in turn realizes the lubrication of the rotor and the linkage, thereby improving the lubrication effect, reducing wear and increasing the service life of the compressor.

Further, the boss 122 of the crankshaft 100 has a diameter greater than a diameter of a raceway of the bearing, for example by 1mm to 2mm, which is advantageous to stably support the bearing, and avoids large range movement of the bearing.

Furthermore, the first shaft 110 has a chamfer provided at an end thereof facing away from the second shaft 130, and the chamfer has a width smaller than any wall thickness of the first oil channel 111, which is convenient to guide the rotor to be installed onto the first shaft 110.

### Eighth Embodiment

A refrigeration device includes the compressor according to any one of the embodiments as described above. Since the refrigeration device according to the embodiment includes the compressor according to any one of the above embodiments, the refrigeration device has the beneficial effects as described in any one of the above embodiments, and the description thereof will be omitted herein.

Further, the refrigeration device further includes a condenser, a pressure reducing member, and an evaporator. The compressor has an outlet in communication with an inlet of the condenser. The pressure reducing member has an inlet in communication with an outlet of the condenser. The evaporator has an inlet in communication with an outlet of the pressure reducing member and an outlet in communication with an inlet of the compressor. Thus, refrigeration and heating cycles can be realized. Further, since the compressor has a relatively long service life, a service life of the refrigeration system can be ensured.

Specifically, the refrigeration device is a refrigerator or an air conditioner, etc.

Throughout this specification, the term "a plurality of" refers to two or more, unless specifically noted otherwise. The terms such as "installed", "connected", "connection", and "fixed" should be understood in a broad sense. For example, "connection" may refer to a fixed connection, a detachable connection, or an integral connection, and "connected" may refer to "directly connected" or "indirectly connected through an intermediate". Those skilled in the art can understand the specific meanings of the above terms in the present disclosure based on specific situations.

Throughout this specification, description of terms such as "an embodiment", "some embodiments", and "a specific embodiment" means that a particular feature, structure, material, or characteristic described in connection with the embodiment or example is included in at least one embodiment or example of the present disclosure. The appearances of the above terms throughout this specification are not necessarily referring to the same embodiment or example of the present disclosure. Furthermore, the particular features, structures, materials, or characteristics described herein may be combined in any suitable manner in one or more embodiments or examples.

The above are only preferred embodiments of the present disclosure, and are not intended to limit the present disclosure. Various modifications and changes to the present disclosure may be made by those skilled in the art.

## Claims

1. A crankshaft (100), comprising:
a first shaft (110);
a second shaft (130);
a first crank arm (120) disposed at an end of the first shaft (110), the first crank arm (120) being provided with a first oil channel (111), and the first oil channel (111) penetrating through the first shaft (110);
a second crank arm (140) disposed at an end of the second shaft (130), the second crank arm (140) being provided with a second oil channel (131), and the second oil channel (131) penetrating through the second shaft (130); and
a recessed portion (121) disposed on an end surface of the first crank arm (120) facing away from the first shaft (110) or on an end surface of the second crank arm (140) facing away from the second shaft (130), the second crank arm (140) being configured to be connected to the first crank arm (120) in such a manner the first oil channel (111) and the second oil channel (131) are in communication with each other via the recessed portion (121),
**characterized in that**,
wherein the second shaft (130) is eccentrically arranged relative to an axis of the first shaft (110) in a first direction, and the recessed portion (121) at least partially extends in the first direction.

2. The crankshaft (100) according to claim 1, wherein the recessed portion (121) is disposed on the end surface of the first crank arm (120) facing away from the first shaft (110), and the first oil channel (111) penetrates through a part of a bottom wall of the recessed portion (121); or wherein
the recessed portion (121) is disposed on the end surface of the second crank arm (140) facing away from the second shaft (130), and the second oil channel (131) penetrates through a part of a bottom wall of the recessed portion (121).

3. The crankshaft (100) according to claim 1, wherein the recessed portion (121) has an opening in an elliptical shape with a center eccentrically arranged relative to the axis of the first shaft (110) in the first direction wherein
preferably,
the elliptical shape has a short axis extending in the first direction and a long axis corresponding to two short arc segments; and
the two short arc segments are located on the first crank arm (120), and one of the two short arc segments extends to a region where the second oil channel (131) is located, or
the two short arc segments are located on the second crank arm (140), and one of the two short arc segments extends to a region where the first oil channel (111) is located.

4. The crankshaft (100) according to any one of claims 1 to 3, wherein
the first crank arm (120) and the first shaft (110) are integrally formed;
the second crank arm (140) and the second shaft (130) are integrally formed; and
the first crank arm (120) is connected to the second crank arm (140).

5. The crankshaft (100) according to any one of claims 1 to 4, wherein
the first crank arm (120) and the first shaft (110) are integrally formed by forging and pressing;
the second crank arm (140) and the second shaft (130) are integrally formed by forging and pressing; and
the first crank arm (120) and the second crank arm (140) are welded together by resistance welding.

6. The crankshaft (100) according to any one of claims 1 to 5, wherein
at an end of the second crank arm (140) facing away from the second shaft (130) is provided with a welding strip (141) , the welding strip (141) being configured to be arranged around an outer periphery of the recessed portion (121); and
the second crank arm (140) is welded onto the first crank arm (120) through the welding strip (141) by resistance welding,
preferably, the welding strip (141) has an outer contour same as an outer contour of the second crank arm (140); and/or the welding strip (141) has a cross section in a trapezoidal or wedge shape, and/or
preferably, an end surface of the welding strip (141) facing towards the first crank arm (120) has a width greater than or equal to 0.2mm.

7. The crankshaft (100) according to any one of claims 1 to 6, wherein a wall thickness of the first oil channel (111) is not identical on any cross section of the first shaft (110); wherein
the first oil channel (111) preferably has an axisymmetric special-shaped hole structure on any cross section of the first shaft (110); or
the first oil channel (111) preferably has a circular hole structure on any cross section of the first shaft (110), the circular hole structure having a center deviated from the axis of the first shaft (110).

8. The crankshaft (100) according to claim 7, wherein
the first oil channel (111) has a thin-walled section (112) and a thick-walled section (113) on any cross section of the first shaft (110); and
the second shaft (130) is arranged eccentrically relative to the axis of the first shaft (110) in a direction away from the thin-walled section (112);
wherein the second shaft (130) and the thin-walled section (112) preferably have a central angle relative to the axis of the first shaft (110), wherein the central angle preferably is greater than or equal to 90°; and wherein
the thin-walled section (112) preferably has an inner contour being a third circular arc, and the thick-walled section (113) preferably has an inner contour being a fourth circular arc;
either the third circular arc or the fourth circular arc preferably is opened towards the axis of the first shaft (110), and the other one of the third circular arc and the fourth circular arc preferably is opened away from the axis of the first shaft (110).

9. The crankshaft (100) according to claim 8, wherein the thin-walled section (112) has an inner contour being a first circular arc, the thick-walled section (113) has an inner contour being a second circular arc, and the first circular arc as well as the second circular arc are opened towards the axis of the first shaft (110).

10. The crankshaft according to claim 9, wherein
the thin-walled section (112) has a wall thickness greater than or equal to 0.3mm; and/or
the first circular arc has an arc length ranging from 3mm to 5mm; and/or
a difference between a radius of the first circular arc and a radius of the second circular arc is in a range of 0mm to 2mm; and/or
the first oil channel (111) further has a transition section (114) connecting the thin-walled section (112) with the thick-walled section (113), the transition section (114) having an inner contour with a first straight line; and
a first tangent line is made at an intersection of the first circular arc with the first straight line, a second tangent line is made at an intersection of the second circular arc with the first straight line, and the first tangent line and the second tangent line have an included angle facing towards an inside of the first shaft (110), wherein the included angle is greater than 90°.

11. The crankshaft (100) according to any one of claims 1 to 10, wherein
an end the first crank arm (120) close to the first shaft (110) is provided with a boss (122) ; and
the boss (122) surrounds the first shaft (110), and a groove is formed between the boss (122) and the first shaft (110)wherein
the boss (122) preferably has a height greater than 0.5mm; and/or
the groove preferably has a depth smaller than or equal to 0.8mm.

12. The crankshaft (100) according to any one of claims 1 to 11, wherein
the first shaft (110) is provided with a first oil hole (115), the first oil hole (115) being in communication with the first oil channel (111); and
the second shaft (130) is provided with a second oil hole (132), the second oil hole (132) being in communication with the second oil channel (131),
the first oil hole (115) preferably has a diameter greater than or equal to 1.5mm; and
the second oil hole (132) preferably has a diameter greater than or equal to 1.5mm.

13. A compressor, comprising:
a crankshaft (100) according to any one of claims 1 to 12;
a housing, wherein a bottom of the housing is provided with an oil pool;
a motor disposed within the housing and having a rotor sleeved on a first shaft (110);
a bearing sleeved on the first shaft (110) and located between the rotor and a first crank arm (120); and
a piston connected to an end of a linkage, the linkage having an other end connected to a second shaft (130).

14. A refrigeration device, comprising:
a compressor according to claim 13;
a condenser having an inlet in communication with an outlet of the compressor;
a pressure reducing member having an inlet in communication with an outlet of the condenser; and
an evaporator having an inlet in communication with an outlet of the pressure reducing member and an outlet in communication with an inlet of the compressor.

## Patentansprüche

1. Kurbelwelle (100), umfassend:
eine erste Welle (110);
eine zweite Welle (130);
einen ersten Kurbelarm (120), der sich an einem Ende der ersten Welle (110) befindet, wobei der erste Kurbelarm (120) mit einem ersten Ölkanal (111) versehen ist, und der erste Ölkanal (111) die erste Welle (110) durchdringt;
einen zweiten Kurbelarm (140), der sich an einem Ende der zweiten Welle (130) befindet, wobei der zweite Kurbelarm (140) mit einem zweiten Ölkanal (131) versehen ist, und der zweite Ölkanal (131) die zweite Welle (130) durchdringt; und
einen ausgesparten Bereich (121), der sich an einer von der ersten Welle (110) abgewandten Endfläche des ersten Kurbelarms (120) oder an einer von der zweiten Welle (130) abgewandten Endfläche des zweiten Kurbelarms (140) befindet, wobei der zweite Kurbelarm (140) so konfiguriert ist, dass er mit dem ersten Kurbelarm (120) auf eine solche Weise verbunden ist, dass der erste Ölkanal (111) und der zweite Ölkanal (131) über den ausgesparten Bereich (121) miteinander in Verbindung stehen,
**dadurch gekennzeichnet, dass**
wobei die zweite Welle (130) relativ zu einer Achse der ersten Welle (110) in einer ersten Richtung exzentrisch angeordnet ist und der ausgesparte Bereich (121) sich zumindest teilweise in der ersten Richtung erstreckt.

2. Kurbelwelle (100) gemäß Anspruch 1, wobei sich der ausgesparte Bereich (121) an der von der ersten Welle (110) abgewandten Endfläche des ersten Kurbelarms (120) befindet und der erste Ölkanal (111) einen Teil einer Bodenwand des ausgesparten Bereichs (121) durchdringt; oder wobei
sich der ausgesparte Bereich (121) an der von der zweiten Welle (130) abgewandten Endfläche des zweiten Kurbelarms (140) befindet und der zweite Ölkanal (131) einen Teil einer Bodenwand des ausgesparten Bereichs (121) durchdringt.

3. Kurbelwelle (100) gemäß Anspruch 1, wobei der ausgesparte Bereich (121) eine Öffnung in einer elliptischen Form mit einem in der ersten Richtung exzentrisch zur Achse der ersten Welle (110) angeordneten Zentrum aufweist, wobei
vorzugsweise,
die elliptische Form eine kurze Achse aufweist, die sich in der ersten Richtung erstreckt, und eine lange Achse, die zwei kurzen Bogensegmenten entspricht; und
sich die beiden kurzen Bogensegmente am ersten Kurbelarm (120) befinden und eines der beiden kurzen Bogensegmente sich bis zu einem Bereich erstreckt, in dem sich der zweite Ölkanal (131) befindet , oder
sich die beiden kurzen Bogensegmente am zweiten Kurbelarm (140) befinden und eines der beiden kurzen Bogensegmente sich bis zu einem Bereich erstreckt, in dem sich der erste Ölkanal (111) befindet.

4. Kurbelwelle (100) gemäß einem der Ansprüche 1 bis 3, wobei
der erste Kurbelarm (120) und die erste Welle (110) einstückig ausgebildet sind;
der zweite Kurbelarm (140) und die zweite Welle (130) einstückig ausgebildet sind; und
der erste Kurbelarm (120) mit dem zweiten Kurbelarm (140) verbunden ist.

5. Kurbelwelle (100) gemäß einem der Ansprüche 1 bis 4, wobei
der erste Kurbelarm (120) und die erste Welle (110) durch Schmieden und Pressen einstückig ausgebildet sind;
der zweite Kurbelarm (140) und die zweite Welle (130) durch Schmieden und Pressen einstückig ausgebildet sind; und
der erste Kurbelarm (120) und der zweite Kurbelarm (140) durch Widerstandsschweißen miteinander verbunden sind.

6. Kurbelwelle (100) gemäß einem der Ansprüche 1 bis 5, wobei
an einem von der zweiten Welle (130) abgewandten Ende des zweiten Kurbelarms (140) mit einem Schweißstreifen (141) versehen ist, wobei der Schweißstreifen (141) so konfiguriert ist, dass er um einen Außenumfang des ausgesparten Bereichs (121) herum angeordnet wird; und
der zweite Kurbelarm (140) durch den Schweißstreifen (141) durch Widerstandsschweißen an den ersten Kurbelarm (120) geschweißt wird,
der Schweißstreifen (141) vorzugsweise eine Außenkontur aufweist, die mit einer Außenkontur des zweiten Kurbelarms (140) übereinstimmt; und/oder der Schweißstreifen (141) einen trapez- oder keilförmigen Querschnitt aufweist, und/oder
eine Endfläche des Schweißstreifens (141), die dem ersten Kurbelarm (120) zugewandt ist, vorzugsweise eine Breite größer oder gleich 0,2 mm aufweist.

7. Kurbelwelle (100) gemäß einem der Ansprüche 1 bis 6, wobei eine Wandstärke des ersten Ölkanals (111) nicht an jedem Querschnitt der ersten Welle (110) identisch ist; wobei
der erste Ölkanal (111) vorzugsweise eine achsensymmetrische, speziell geformte Lochstruktur an einem beliebigen Querschnitt der ersten Welle (110) aufweist; oder
der erste Ölkanal (111) vorzugsweise eine kreisförmige Lochstruktur an jedem Querschnitt der ersten Welle (110) aufweist, wobei die kreisförmige Lochstruktur einen von der Achse der ersten Welle (110) abweichenden Mittelpunkt aufweist.

8. Kurbelwelle (100) gemäß Anspruch 7, wobei
der erste Ölkanal (111) einen dünnwandigen Abschnitt (112) und einen dickwandigen Abschnitt (113) an jedem Querschnitt der ersten Welle (110) aufweist; und
die zweite Welle (130) exzentrisch zur Achse der ersten Welle (110) in einer Richtung weg von dem dünnwandigen Abschnitt (112) angeordnet ist;
wobei die zweite Welle (130) und der dünnwandige Abschnitt (112) vorzugsweise einen zentralen Winkel relativ zur Achse der ersten Welle (110) aufweisen, wobei der zentrale Winkel vorzugsweise größer als oder gleich 90° ist; und wobei
der dünnwandige Abschnitt (112) vorzugsweise eine Innenkontur aufweist, die ein dritter Kreisbogen ist, und der dickwandige Abschnitt (113) vorzugsweise eine Innenkontur aufweist, die ein vierter Kreisbogen ist;
entweder der dritte Kreisbogen oder der vierte Kreisbogen vorzugsweise in Richtung der Achse der ersten Welle (110) geöffnet ist, und der andere des dritten Kreisbogens und des vierten Kreisbogens vorzugsweise von der Achse der ersten Welle (110) weg geöffnet ist.

9. Kurbelwelle (100) gemäß Anspruch 8, wobei der dünnwandige Abschnitt (112) eine Innenkontur aufweist, die ein erster Kreisbogen ist, der dickwandige Abschnitt (113) eine Innenkontur aufweist, die ein zweiter Kreisbogen ist, und sowohl der erste Kreisbogen als auch der zweite Kreisbogen zur Achse der ersten Welle (110) hin geöffnet sind.

10. Kurbelwelle gemäß Anspruch 9, wobei
der dünnwandige Abschnitt (112) eine Wandstärke von 0,3 mm oder mehr aufweist; und/oder
der erste Kreisbogen eine Bogenlänge von 3 mm bis 5 mm aufweist; und/oder
ein Unterschied zwischen einem Radius des ersten Kreisbogens und einem Radius des zweiten Kreisbogens in einem Bereich von 0 mm bis 2 mm liegt; und/oder
der erste Ölkanal (111) ferner einen Übergangsabschnitt (114) aufweist, der den dünnwandigen Abschnitt (112) mit dem dickwandigen Abschnitt (113) verbindet, wobei der Übergangsabschnitt (114) eine Innenkontur mit einer ersten geraden Linie aufweist; und
eine erste Tangente an einem Schnittpunkt des ersten Kreisbogens mit der ersten geraden Linie gebildet wird, eine zweite Tangente an einem Schnittpunkt des zweiten Kreisbogens mit der ersten geraden Linie gebildet wird, und die erste Tangente und die zweite Tangente einen eingeschlossenen Winkel aufweisen, der zu einer Innenseite der ersten Welle (110) weist, wobei der eingeschlossene Winkel größer als 90° ist.

11. Kurbelwelle (100) gemäß einem der Ansprüche 1 bis 10, wobei
ein Ende des ersten Kurbelarms (120) in der Nähe der ersten Welle (110) mit einer Nabe (122) versehen ist; und
die Nabe (122) die erste Welle (110) umgibt, und eine Nut zwischen der Nabe (122) und der ersten Welle (110) ausgebildet ist, wobei
der Vorsprung (122) vorzugsweise eine Höhe von mehr als 0,5 mm aufweist; und/oder
die Nut vorzugsweise eine Tiefe kleiner oder gleich 0,8 mm aufweist.

12. Kurbelwelle (100) gemäß einem der Ansprüche 1 bis 11, wobei
die erste Welle (110) mit einem ersten Öl-Loch (115) versehen ist, wobei das erste Öl-Loch (115) in Verbindung mit dem ersten Ölkanal (111) steht; und
die zweite Welle (130) mit einem zweiten Öl-Loch (132) versehen ist, wobei das zweite Öl-Loch (132) in Verbindung mit dem zweiten Ölkanal (131) steht,
das erste Öl-Loch (115) vorzugsweise einen Durchmesser von 1,5 mm oder mehr aufweist; und
das zweite Öl-Loch (132) vorzugsweise einen Durchmesser von 1,5 mm oder mehr aufweist.

13. Kompressor, umfassend:
eine Kurbelwelle (100) gemäß einem der Ansprüche 1 bis 12;
ein Gehäuse, wobei ein Boden des Gehäuses mit einer Ölwanne versehen ist;
einen Motor, der sich in dem Gehäuse befindet und einen auf einer ersten Welle (110) gelagerten Rotor aufweist;
ein Lager, das auf der ersten Welle (110) gelagert und sich zwischen dem Rotor und einem ersten Kurbelarm (120) befindet; und
einen Kolben, der mit einem Ende eines Gestänges verbunden ist, wobei das Gestänge ein anderes Ende aufweist, das mit einer zweiten Welle (130) verbunden ist.

14. Kühlvorrichtung, umfassend:
einen Kompressor gemäß Anspruch 13;
einen Kondensator aufweisend einen Einlass, der mit einem Auslass des Kompressors in Verbindung steht;
ein Druckminderungselement aufweisend einen Einlass, der mit einem Auslass des Kondensators in Verbindung steht; und
einen Verdampfer aufweisend einen Einlass, der mit einem Auslass des Druckminderungselements in Verbindung steht, und einen Auslass, der mit einem Einlass des Kompressors in Verbindung steht.

## Revendications

1. Vilebrequin (100), comprenant :
un premier arbre (110) ;
un deuxième arbre (130) ;
un premier bras de manivelle (120) disposé à une extrémité du premier arbre (110), le premier bras de manivelle (120) étant pourvu d'un premier canal d'huile (111), et le premier canal d'huile (111) pénétrant à travers le premier arbre (110) ;
un deuxième bras de manivelle (140) disposé à une extrémité du deuxième arbre (130), le deuxième bras de manivelle (140) étant pourvu d'un deuxième canal d'huile (131), et le deuxième canal d'huile (131) pénétrant à travers le deuxième arbre (130); et
une partie en retrait (121) disposée sur une surface d'extrémité du premier bras de manivelle (120) opposée au premier arbre (110) ou sur une surface d'extrémité du second bras de manivelle (140) opposée au second arbre (130), le second bras de manivelle (140) étant configuré pour être relié au premier bras de manivelle (120) de telle sorte que le premier canal d'huile (111) et le second canal d'huile (131) soient en communication l'un avec l'autre par l'intermédiaire de la partie en retrait (121),
**caractérisé par le fait que**,
le deuxième arbre (130) est excentré par rapport à un axe du premier arbre (110) dans une première direction, et la partie évidée (121) s'étend au moins partiellement dans la première direction.

2. Vilebrequin (100) selon la revendication 1, dans lequel la partie évidée (121) est disposée sur la surface d'extrémité du premier bras de manivelle (120) à l'opposé du premier arbre (110), et le premier canal d'huile (111) pénètre à travers une partie d'une paroi inférieure de la partie évidée (121) ; ou dans lequel
la partie évidée (121) est disposée sur la surface d'extrémité du second bras de manivelle (140) orienté à l'opposé du second arbre (130), et le second canal d'huile (131) pénètre à travers une partie d'une paroi inférieure de la partie évidée (121).

3. Vilebrequin (100) selon la revendication 1, dans lequel la partie évidée (121) a une ouverture de forme elliptique avec un centre excentré par rapport à l'axe du premier arbre (110) dans la première direction, où
de préférence, la forme elliptique a un axe court s'étendant dans la première direction et un axe long correspondant à deux segments d'arc courts ; et
les deux segments d'arc courts sont situés sur le premier bras de manivelle (120), et l'un des deux segments d'arc courts s'étend jusqu'à une région où se trouve le second canal d'huile (131), ou
les deux segments d'arc courts sont situés sur le deuxième bras de manivelle (140), et l'un des deux segments d'arc courts s'étend jusqu'à une zone où se trouve le premier canal d'huile (111).

4. Vilebrequin (100) selon l'une quelconque des revendications 1 à 3, dans lequel
le premier bras de manivelle (120) et le premier arbre (110) sont formés d'une seule pièce ;
le deuxième bras de manivelle (140) et le deuxième arbre (130) sont formés d'une seule pièce ; et
le premier bras de manivelle (120) est relié au second bras de manivelle (140).

5. Vilebrequin (100) selon l'une quelconque des revendications 1 à 4, dans lequel
le premier bras de manivelle (120) et le premier arbre (110) sont formés intégralement par forgeage et emboutissage ;
le deuxième bras de manivelle (140) et le deuxième arbre (130) sont formés intégralement par forgeage et emboutissage ; et
le premier bras de manivelle (120) et le second bras de manivelle (140) sont soudés ensemble par soudage par résistance.

6. Vilebrequin (100) selon l'une quelconque des revendications 1 à 5, dans lequel
à une extrémité du second bras de manivelle (140) opposée au second arbre (130) se trouve une bande de soudure (141), la bande de soudure (141) étant configurée pour être disposée autour d'une périphérie extérieure de la partie évidée (121) ; et
le deuxième bras de manivelle (140) est soudé sur le premier bras de manivelle (120) à travers la bande de soudure (141) par soudage par résistance,
de préférence, la bande de soudure (141) a un contour extérieur identique au contour extérieur du second bras de manivelle (140) ; et/ou la bande de soudure (141) a une section transversale en forme de trapèze ou de coin, et/ou
de préférence, une surface d'extrémité de la bande de soudure (141) orientée vers le premier bras de manivelle (120) a une largeur supérieure ou égale à 0,2 mm.

7. Le vilebrequin (100) selon l'une des revendications 1 à 6, dans lequel une épaisseur de paroi du premier canal d'huile (111) n'est pas identique sur toute section transversale du premier arbre (110) ; dans lequel
le premier canal d'huile (111) présente de préférence une structure de trou de forme spéciale axisymétrique sur n'importe quelle section transversale du premier arbre (110) ; ou
le premier canal d'huile (111) présente de préférence une structure de trou circulaire sur toute section transversale du premier arbre (110), la structure de trou circulaire ayant un centre dévié de l'axe du premier arbre (110).

8. Vilebrequin (100) selon la revendication 7, dans lequel
le premier canal d'huile (111) présente une section à paroi mince (112) et une section à paroi épaisse (113) sur toute section transversale du premier arbre (110) ; et
le deuxième arbre (130) est excentré par rapport à l'axe du premier arbre (110) dans une direction opposée à la section à paroi mince (112) ;
dans lequel le deuxième arbre (130) et la section à paroi mince (112) ont de
préférence un angle central par rapport à l'axe du premier arbre (110), l'angle central étant de préférence supérieur ou égal à 90°; et dans lequel
la section à paroi mince (112) a de préférence un contour intérieur qui est un troisième arc de cercle,
et la section à paroi épaisse (113) a de préférence un contour intérieur correspondant à un quatrième arc de cercle ;
le troisième ou le quatrième arc de cercle est de préférence ouvert vers l'axe du premier arbre (110), et l'autre du troisième ou du quatrième arc de cercle est de préférence ouvert à l'opposé de l'axe du premier arbre (110).

9. Vilebrequin (100) selon la revendication 8, dans lequel la section à paroi mince (112) a un contour intérieur qui est un premier arc de cercle, la section à paroi épaisse (113) a un contour intérieur qui est un deuxième arc de cercle, et le premier arc de cercle ainsi que le deuxième arc de cercle sont ouverts vers l'axe du premier arbre (110).

10. Vilebrequin selon la revendication 9, dans lequel
la section à paroi mince (112) a une épaisseur de paroi supérieure ou égale à 0,3 mm ; et/ou
le premier arc de cercle a une longueur d'arc comprise entre 3 mm et 5 mm ; et/ou
la différence entre le rayon du premier arc de cercle et le rayon du second arc de cercle est comprise entre 0 mm et 2 mm ; et/ou
le premier canal d'huile (111) comporte en outre une section de transition (114) reliant la section à paroi mince (112) à la section à paroi épaisse (113), la section de transition (114) ayant un contour intérieur avec une première ligne droite ; et
une première ligne tangente est tracée à une intersection du premier arc de cercle avec la première ligne droite, une seconde ligne tangente est tracée à une intersection du second arc de cercle avec la première ligne droite, et la première ligne tangente et la seconde ligne tangente ont un angle inclus orienté vers l'intérieur du premier arbre (110), dans lequel l'angle inclus est supérieur à 90°.

11. Vilebrequin (100) selon l'une des revendications 1 à 10, dans lequel
une extrémité du premier bras de manivelle (120) proche du premier arbre (110) est pourvue d'un bossage (122) ; et
le bossage (122) entoure le premier arbre (110), et une rainure est formée entre le bossage (122) et le premier arbre (110), dans laquelle
le bossage (122) a de préférence une hauteur supérieure à 0,5 mm ; et/ou
la rainure a de préférence une profondeur inférieure ou égale à 0,8 mm.

12. Vilebrequin (100) selon l'une quelconque des revendications 1 à 11, dans lequel
le premier arbre (110) est pourvu d'un premier trou d'huile (115), le premier trou d'huile (115) étant en communication avec le premier canal d'huile (111) ; et
le deuxième arbre (130) est pourvu d'un deuxième trou d'huile (132), le deuxième trou d'huile (132) étant en communication avec le deuxième canal d'huile (131),
le premier trou d'huile (115) a de préférence un diamètre supérieur ou égal à 1,5 mm ; et
le deuxième trou d'huile (132) a de préférence un diamètre supérieur ou égal à 1,5 mm.

13. Compresseur comprenant :
un vilebrequin (100) selon l'une quelconque des revendications 1 à 12 ;
un carter, dans lequel le fond du carter est pourvu d'un bassin d'huile ;
un moteur disposé à l'intérieur du carter et comportant un rotor manchonné sur un premier arbre (110) ;
un palier monté sur le premier arbre (110) et situé entre le rotor et un premier bras de manivelle (120) ; et
un piston relié à une extrémité d'une tringlerie, la tringlerie ayant une autre extrémité reliée à un second arbre (130).

14. Dispositif de réfrigération comprenant :
un compresseur selon la revendication 13 ;
un condenseur ayant une entrée en communication avec une sortie du compresseur ;
un réducteur de pression dont l'entrée est en communication avec une sortie du condenseur ; et
un évaporateur dont l'entrée est en communication avec une sortie du réducteur de pression et dont une sortie est en communication avec l'entrée du compresseur.
